# EUROPÄISCHE PATENTSCHRIFT

(11) **EP 3 088 109 B1**
(45) Veröffentlichungstag und Bekanntmachung des Hinweises auf die Patenterteilung: **04.03.2020**
(21) Anmeldenummer: 16158970.0
(22) Anmeldetag: 07.03.2016
(51) Int. Cl.: B23B 31/26, B23B 29/04

(54) **SEGMENTSPANNZANGE**
SEGMENT TENSIONING CLAMP
PINCE DE SERRAGE A SEGMENT

(30) Priorität: 27.04.2015 DE 102015106437
(43) Veröffentlichungstag der Anmeldung: 02.11.2016
(73) Patentinhaber: Röhm GmbH, 89567 Sontheim (DE)
(72) Erfinder: Kempter, Stefan, 89361 Landensberg (DE); Dolpp, Andreas, 89564 Nattheim (DE)
(74) Vertreter: Hentrich Patentanwälte PartG mbB

(56) Entgegenhaltungen:
- GB-A- 901 999
- US-A- 2 459 900

## Beschreibung

Die Erfindung betrifft eine Segmentspannzange mit den Merkmalen des Oberbegriffs von Patentanspruch 1. Ferner betrifft die Erfindung einen Kopplungsring für eine Segmentspannzange nach dem Oberbegriff des Anspruchs 10. Solche Segmentspannzange und Kopplungsringe sind aus GB 901 999 A bekannt.

Eine Segmentspannzange ist beispielsweise in der DE 100 59 209 A1 der Anmelderin gezeigt. Der Kopplungsring ist dabei als ein vulkanisierter Ring gebildet. Bei der Herstellung dieser Segmentspannzange sind zunächst die einzelnen Spannsegmente zu reinigen. Anschließend wird eine Haftbrücke, d.h. ein Primer auf die Oberflächen des Spannsegments aufgetragen, auf dem ein Vulkanisat anhaften kann. Die Spannsegmente sind dabei positionsgenau in einer Form anzuordnen, so dass sie nach dem Vulkanisierungsvorgang ihre gewünschte über den Umfang des Kopplungsrings verteilte Lage eingenommen haben. Das Vulkanisat wird unter Druck und Wärmezufuhrauf die in der Form eingelegten Spannsegmente aufgetragen, um die Spannsegmente zu einer Segmentspannzange zusammenzufassen. Dieses Herstellungsverfahren hat sich als sehr aufwändig, kostenintensiv und sich teilweise aufgrund der vielen Fertigungsschritte als fehleranfällig herausgestellt.

Auch die US 2,459,900 zeigt eine Segmentspannzange, die mehrere mittels eines elastischen Materials miteinander verbundene Spannsegmente umfasst. Auch hier wird das elastische Material um die Spannsegmente gegossen. In der die Merkmale des Oberbegriffes des Patentanspruchs 1 zeigenden GB 901,999 ist ebenfalls eine Segmentspannzange gezeigt, deren Spannsegmente mittels eines nicht-metallischen elastischen Materials zusammengehalten werden. Für die Verbindung des elastischen Materials mit den Spannsegmenten wird eine Technik verwendet, so dass sich die Spannsegmente nicht mehr von dem elastischen Material lösen lassen.

Es ist daher die Aufgabe der vorliegenden Erfindung, eine Segmentspannzange derart weiterzubilden, dass die Herstellung vereinfacht ist. Es ist des Weiteren die Aufgabe der vorliegenden Erfindung einen Kopplungsring bereitzustellen, der günstiger in der Herstellung gegenüber denjenigen aus dem Stand der Technik Bekannten ist.

Die die Segmentspannzange betreffende Aufgabe wird durch die Merkmale der Ansprüche 1 und 10. gelöst. Damit ist gewährleistet, dass der Kopplungsring im Verhältnis zu einem bisher vulkanisierten Kopplungsring sehr viel kostengünstiger hergestellt werden kann. Des Weiteren sind auch die Spannsegmente nicht mehr in eine vorgegebene Form einzusetzen, da diese durch die Sicherungsmittel nunmehr in ihrer Lage festgelegt sind bezüglich des Kopplungsrings. Außerdem ist die unerwünschte Trennung des Kopplungsrings von den Spannsegmenten, bzw. die unerwünschte Trennung einzelner Spannsegmente vom Kopplungsring durch die Sicherungsmittel in axialer Richtung unterbunden.

Durch die Ausbildung der Aufnahmen an der Stirnseite der Spannsegmente lässt sich die Segmentspannzange in ihrem Durchmesser dünn halten. In bevorzugter Weise sind der Durchmesser und die Spannkontur dabei identisch zu denjenigen bestehenden Segmentspannzangen geformt.

Der Kopplungsring ist aus in den Aufnahmen aufgenommenen Sicherungsabschnitten und aus die Sicherungsabschnitte miteinander verbindenden Stegabschnitten gebildet. Durch die Lage der Sicherungsabschnitte des Kopplungsringes ist auch die Lage der Spannsegmente umfangsseitig an dem Kopplungsring vorgegeben.

Die Sicherungsmittel sind gebildet aus einer Ausnehmung, die dem einen aus Aufnahme und Kopplungsring zugeordnet ist und aus einem Sicherungselement, das dem anderen aus Aufnahme und Kopplungsring zugeordnet ist. Die Sicherungselemente sind dabei in der Ausnehmung aufzunehmen und bewirken die Koppelung zwischen dem Kopplungsring und den Spannsegmenten. Dabei ist das Sicherungselement an der Aufnahme der Spannsegmente angeordnet, wenn die Ausnehmung am Kopplungsring vorgesehen ist. Umgekehrt ist das Sicherungselement am Kopplungsring angeordnet, wenn die Ausnehmung in der Aufnahme der Spannsegmente angeordnet ist.

Die Herstellung der Sicherungsmittel ist vereinfacht, weil die als Rastaufnahme gebildete Ausnehmung radial orientiert ist und in die Rastaufnahme das ebenfalls in radialer Richtung angeordnete als Rastglied gebildete Sicherungselement eingreift. Hierbei kann die Ausnehmung entweder radial innenliegend oder radial außenliegend angebracht sein.

Eine weitere Alternative des Anspruchs 1 zeichnet sich dadurch aus, dass die Ausnehmungen in axialer Richtung an den Aufnahmen der Spannsegmente ausgebildet und dass die Sicherungselemente an den Sicherungsabschnitten des Kopplungsrings angeordnet sind. Damit ist der Vorteil verbunden, dass die Ausnehmung in der Aufnahme durch eine einfache Bohrung hergestellt werden kann, die sich vorzugsweise ebenfalls an der Stirnseite der Spannsegmente befindet. In diese Ausnehmung kann dann ein am Kopplungsring vorgesehenes Sicherungselement eingebracht werden, so dass der Kopplungsring bezüglich der Spannsegmente sowohl in seiner axialen Bewegbarkeit begrenzt ist, als auch die Spannsegmente umfangsseitig am Kopplungsring in ihrer Lage festgelegt sind.

Es hat sich als vorteilhaft gezeigt, wenn die Rastglieder dem Kopplungsring zugeordnet und radial elastisch verformbar an den Sicherungsabschnitten gelagert sind. Damit kann also das radial elastisch verformbare Rastglied am Sicherungsabschnitt des Kopplungsrings in eine in der Aufnahme des jeweiligen Spannsegments ausgebildete Ausnehmung einrasten. Bei einer alternativen Ausgestaltung kann beim Überschreiten einer vorgegebenen Kraft das Rastglied des Kopplungsringes auch aus der Ausnehmung der Aufnahme wieder herausgelöst werden. Dies ermöglicht den Austausch einzelner defekter bzw. fehlerhafter Spannsegmente sowie das Tauschen des kompletten Kopplungsringes. Das bietet einen wesentlichen Vorteil gegenüber der bekannten Segmentspannzange, die mit einem vulkanisierten Kopplungsring gebildet ist, denn bei dieser Segmentspannzange ist stets die komplette Segmentspannzange auszutauschen; ein Austausch einzelner Spannsegmente bzw. des Kopplungsringes ist dabei nicht möglich.

Um eine möglichst kraftschlüssige Verbindung zwischen den Ausnehmungen und den Sicherungselementen zu bilden, hat es sich als bevorzugt erwiesen, wenn die Ausnehmungen mit geringerem Durchmesser gebildet sind, als diejenigen der Sicherungselemente.

In diesem Zusammenhang hat es sich als sinnvoll gezeigt, wenn mindestens eine, vorzugsweise alle der Ausnehmungen eine aufgeraute Oberfläche und/oder einen Gewindeschnitt aufweisen, und wenn die Sicherungselemente des Kopplungsrings in die Ausnehmungen eingepresst sind. Dadurch verankern die Sicherungselemente des Kopplungsrings noch fester in den Ausnehmungen der Aufnahmen der Spannsegmente.

Weiterhin hat es sich gemäß einer alternativen Ausführungsform als vorteilhaft erwiesen, wenn die Sicherungselemente den Aufnahmen der Spannsegmente zugeordnet sind, wenn die Sicherungselemente als Sicherungstifte gebildet sind, die in in den Aufnahmen der Spannsegmente ausgebildeten Taschen eingepresst sind und wenn die als Durchtritte für die Sicherungsstifte mit Spiel gestalteten Ausnehmungen an den Sicherungsabschnitten des Kopplungsrings ausgebildet sind. Der Kopplungsring weist dabei also Durchtritte oder Durchgänge auf, durch die ein Sicherungsstift hindurchtreten kann, der vorzugsweise mit dem Durchtritt eine Spielpassung ausbildet. Dabei tritt also kein Verformen bzw. kein Aufweiten der Durchtritte des Kopplungsrings durch die Sicherungsstifte auf. Die Sicherungsstifte besitzen einen Durchmesser, der größer ist als der Durchmesser der in den Aufnahmen der Spannsegmente ausgebildeten Taschen. Dadurch kann der Sicherungsstift in diese Taschen eingepresst werden. Der Sicherungsstift ist vorzugsweise als ein Senkkerbnagel geformt. Alternativ kann der Sicherungsstift auf einen in die Tasche eindrehbaren Schraubenabschnitt umfassen. Weiterhin kann der Sicherungsstift auch als ein Niet gebildet sein. Hinsichtlich der Materialwahl für den Sicherungsstift hat sich sowohl Stahl als auch Kunststoff bevorzugt erwiesen, wobei er weiterhin aus einem harten Elastomer hergestellt sein kann. Der Stift begrenzt die axiale Bewegbarkeit des Kopplungsringes bezüglich der Spannsegmente, wozu dieser einen entsprechend geformten Stiftkopf aufweist.

Um eine Rückstellkraft auf die Spannsegmente ausüben zu können, hat es sich als bevorzugt erwiesen, wenn die Stegabschnitte wellenförmig, vorzugsweise sinuswellenförmig gestaltet sind. Wird der Kopplungsring expandiert, so drücken die wellenförmigen Stegabschnitte den Kopplungsring wieder zurück in seine Ursprungslage und üben dabei eine Rückstellkraft auf die Aufnahmen, d.h. auf die Spannsegmente aus. Dadurch wird die Segmentspannzange also in eine geöffnete Position gedrückt.

Ferner hat es sich als sinnvoll erwiesen, wenn die Stegabschnitte mindestens eine, vorzugsweise an jedem seiner Enden eine Anlagewand zur Anlage einer Wange der Spannsegmente aufweist. An diese Anlagewand liegt also die Wange der Spannsegmente derart an, dass eine möglichst glatte umfangsseitige Oberfläche für die Segmentspannzange entsteht.

In diesem Zusammenhang hat es sich als vorteilhaft erwiesen, wenn die Spannsegmente durch die Anlagewände je zwei benachbarter Stegabschnitte formschlüssig am Kopplungsring gelagert sind. Auch dadurch ist gewährleistet, dass die umfangsseitige Lage der Spannsegmente relativ zum Kopplungsring zusätzlich festgelegt wird. In diesem Zusammenhang hat es sich weiterhin als bevorzugt gezeigt, wenn die Stegabschnitte eine - zumindest geringe - Vorspannung auf die Spannsegmente ausüben, so dass die Spannsegmente noch fester am Kopplungsring gelagert sind.

Weiterhin ergibt sich eine verfestigte Verbindung zwischen dem Kopplungsring und den Spannsegmenten dadurch, dass die Sicherungsabschnitte zusätzlich stoffschlüssig in den Aufnahmen der Spannsegmente gesichert sind. Hierzu wird in die Aufnahmen eine Haftbrücke (Primer) eingebracht, wodurch ein Klebstoff besser an den Spannsegmenten haftet, der seinerseits den Kopplungsring stoffschlüssig in den Aufnahmen der Spannsegmente sichert.

Die den Kopplungsring betreffende Aufgabe wird durch einen Kopplungsring gemäß Patentanspruch 10 gelöst. Hierbei sind in alternierender Reihenfolge angeordnete Sicherungsabschnitte und die Sicherungsabschnitte miteinander verbindende Stegabschnitte vorgesehen. Den Sicherungsabschnitten ist ein Sicherungselement zugeordnet sowohl zur Begrenzung der axialen Bewegbarkeit, als auch zur ringumfangsseitigen, vorzugsweise formschlüssigen Lagefestlegung von Spannsegmenten am Kopplungsring. Dieser Kopplungsring weist also den Vorteil auf, dass an ihm Spannsegmente angeordnet werden können, ohne dass eine aufwändige Vermessung zur Lagebestimmung der Spannsegmente an diesem Ring erforderlich wird. Darüber hinaus sind Spannsegmente in axialer Richtung gegenüber dem Kopplungsring an diesem sicherbar im Bereich seiner Sicherungsabschnitte.

Für die Fertigung hat es sich als besonders sinnvoll erwiesen, die Stegabschnitte und/oder die Sicherungsabschnitte aus einem Elastomer oder aus einem Kunststoff zu bilden Hierzu haben sich als besonders bevorzugt generative Fertigungsverfahren erwiesen, so dass ein Kopplungsring der Erfindung mittels selektivem Lasersintern von Elastomeren oder Kunststoffen hergestellt werden kann. Bei der Fertigung des Kopplungsringes in sehr großer Stückzahl hat es sich als wirtschaftlich vorteilhaft erwiesen, wenn der Kopplungsring in einem Spritzgussverfahren hergestellt wird. Weitere vorteilhafte Ausgestaltungen sind den von Patentanspruch 10 abhängigen Unteransprüchen zu entnehmen.

So hat es sich beispielsweise als sinnvoll erwiesen, wenn die Fläche des Querschnitts des Sicherungsabschnitts kleiner ist, als die Fläche des Stegabschnitts. Damit kann ein in den Kopplungsring eingesetztes Spannsegment umfangsseitig eine glatte Oberfläche mit den Stegabschnitten des Kopplungsringes ausbilden.

Nachfolgend wird die Erfindung anhand der in der Zeichnung dargestellten Ausführungsbeispielen näher erläutert; es zeigen:
- Fig. 1: eine erste Ausführungsform einer Segmentspannzange,
- Fig. 2: die Ausführungsform einer Segmentspannzange nach Fig. 1 mit einem entfernten Spannsegment,

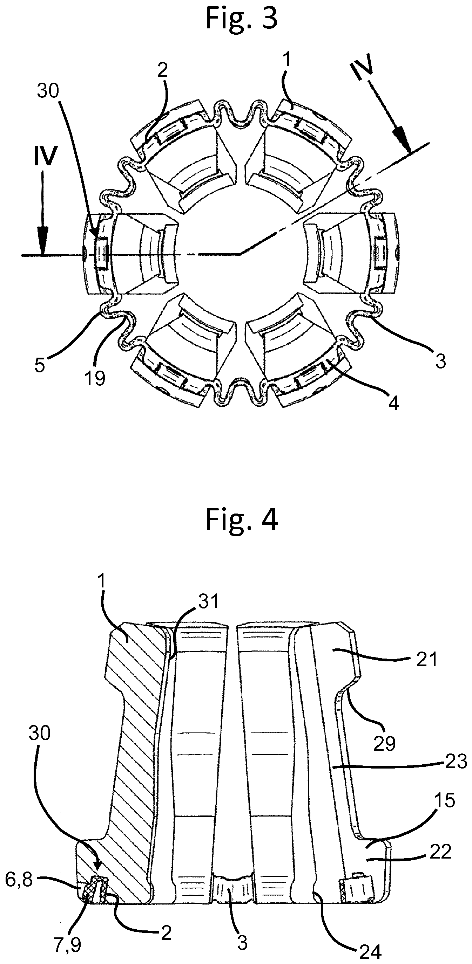

- Fig. 3: eine Draufsicht auf die Segmentspannzange nach Fig. 1,
- Fig. 4: den Schnitt IV-IV aus Fig. 3,

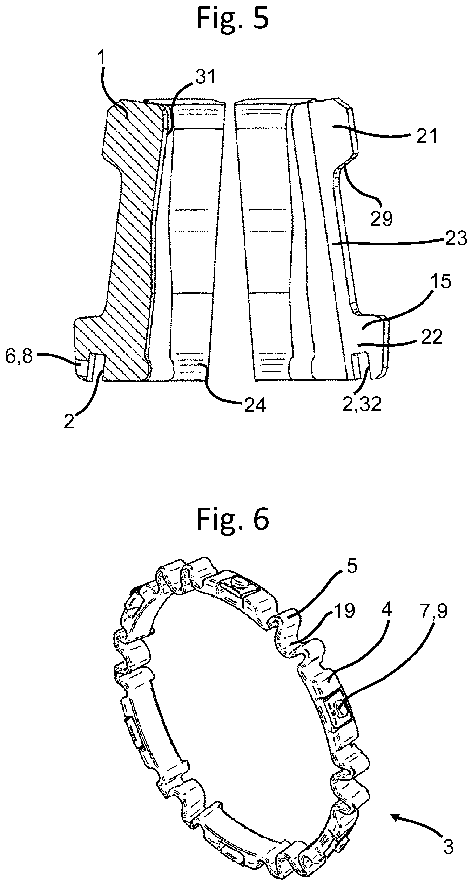

- Fig. 5: eine dem Schnitt IV-IV entsprechende Ansicht einer Segmentspannzange nach Fig. 1 ohne einen Kopplungsring,
- Fig. 6: eine Perspektive des Kopplungsrings der Segmentspannzange nach Fig. 1,
- Fig. 7: eine Draufsicht des Kopplungsrings der Segmentspannzange nach Fig. 1,
- Fig. 8: den Schnitt VIII-VIII aus Fig. 7,
- Fig. 9: das Detail A aus Fig. 8,
- Fig. 10: eine zweite Ausführungsform einer Segmentspannzange,
- Fig. 11: die Segmentspannzange nach Fig. 10 mit einem entfernten Spannsegment,
- Fig. 12: eine dem Schnitt IV-IV entsprechende Ansicht der Segmentspannzange nach Fig. 10,
- Fig. 13: eine dem Schnitt IV-IV entsprechende Ansicht einer Segmentspannzange nach Fig. 10 ohne einen Kopplungsring,

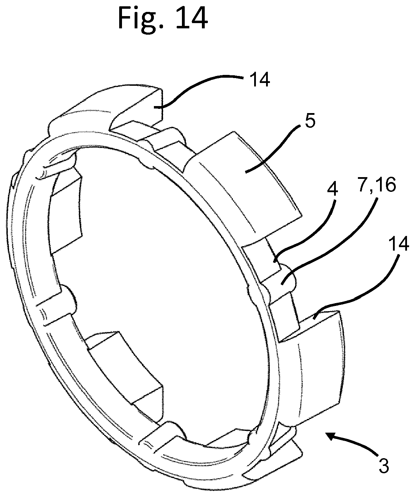

- Fig. 14: den Kopplungsring der Segmentspannzange nach Fig. 10,
- Fig. 15: eine dem Schnitt IV-IV entsprechende Ansicht einer dritten Ausführungsform einer Segmentspannzange,
- Fig. 16: eine dem Schnitt IV-IV entsprechende Ansicht einer Segmentspannzange nach Fig. 15 ohne einen Kopplungsring,
- Fig. 17: eine vierte Ausführungsform einer Segmentspannzange,
- Fig. 18: die Segmentspannzange nach Fig. 17 mit einem entfernten Spannsegment,

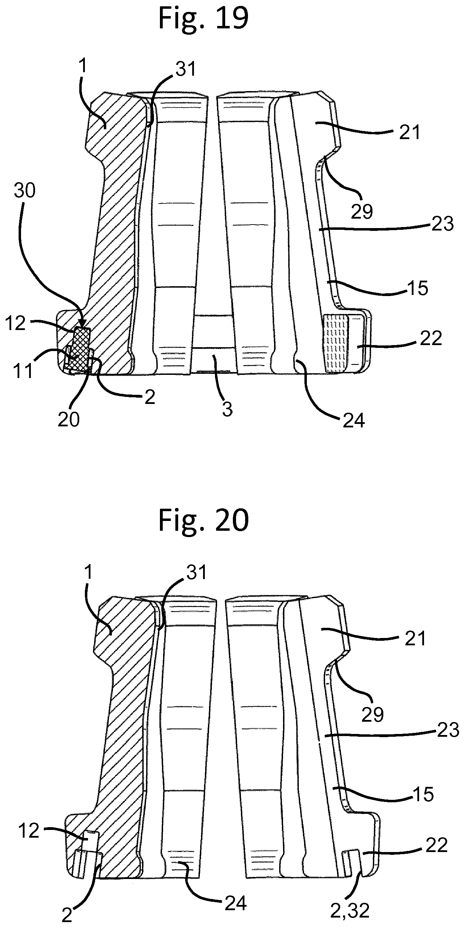

- Fig. 19: eine dem Schnitt IV-IV entsprechende Ansicht der Segmentspannzange nach Fig. 17,
- Fig. 20: eine dem Schnitt IV-IV entsprechende Ansicht der Segmentspannzange nach Fig. 17 ohne einen Kopplungsring,

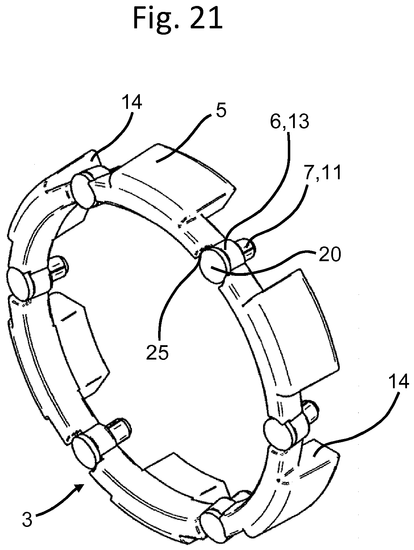

- Fig. 21: den Kopplungsring der Segmentspannzange nach Fig. 17,
- Fig. 22: eine fünfte Ausführungsform einer Segmentspannzange,
- Fig. 23: die Segmentspannzange nach Fig. 22 mit einem entfernten Spannsegment,

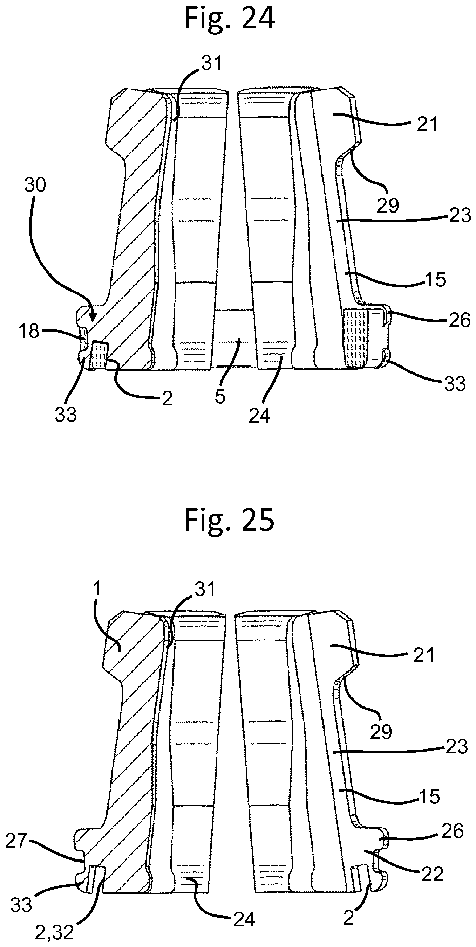

- Fig. 24: eine dem Schnitt IV-IV entsprechende Ansicht der Segmentspannzange nach Fig. 22,
- Fig. 25: eine dem Schnitt IV-IV entsprechende Ansicht der Segmentspannzange nach Fig. 22 ohne einen Kopplungsring,

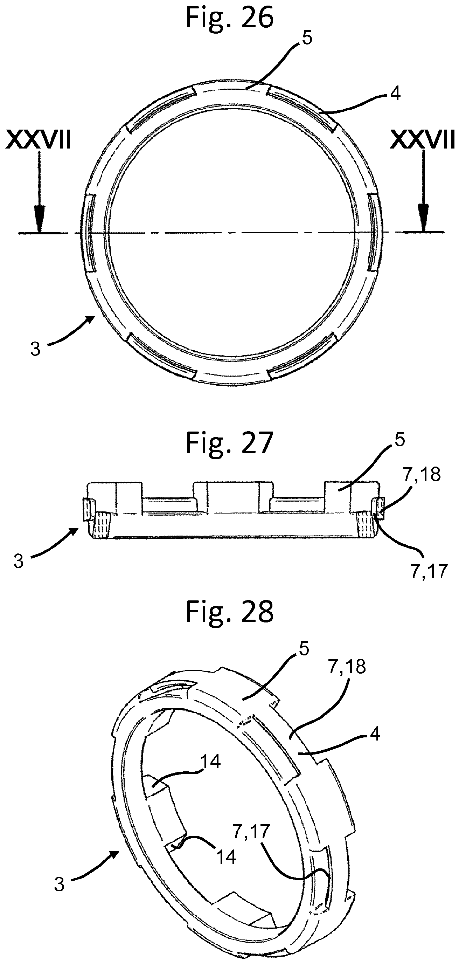

- Fig. 26: eine Draufsicht auf den Kopplungsring der Segmentspannzange nach Fig. 22,
- Fig. 27: den Schnitt XXVII-XXVII aus Fig. 26, und
- Fig. 28: eine Perspektive des Kopplungsrings der Segmentspannzange nach Fig. 22.

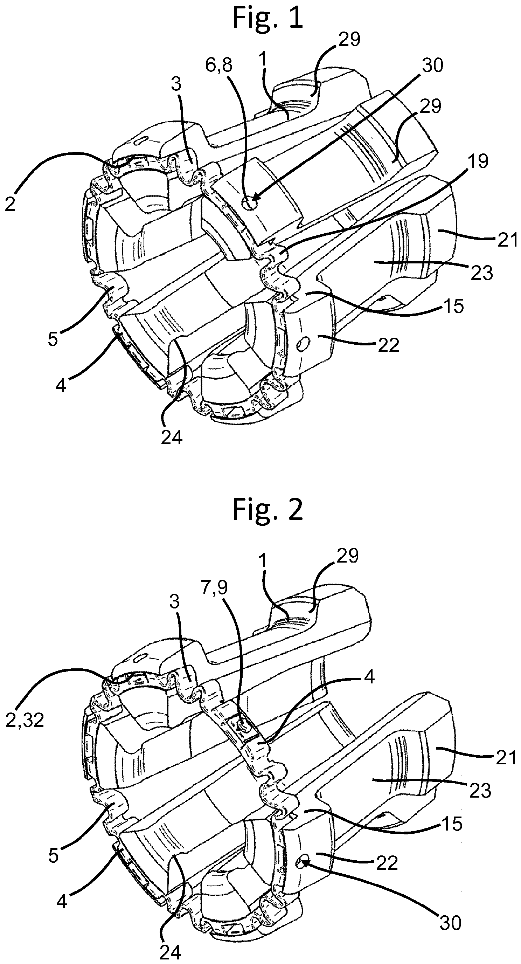

In den Fig. 1, 10, 15, 17 und 22 ist eine erfindungsgemäße Segmentspannzange mit mindestens zwei Spannsegmenten 1 gezeigt. Die Segmentspannzange dient zur lösbaren Kopplung eines einen Hohlschaft mit einer Hohlschaftaufnahme aufweisenden Werkstücks, Werkzeugs oder dergleichen. Bei den erfindungsgemäßen Segmentspannzangen kann prinzipiell jede beliebige geradzahlige oder ungeradzahlige Anzahl von Spannsegmenten 1 eingesetzt werden, wobei sich Ausführungsformen mit sechs oder sieben Spannsegmenten 1 als günstig herausgestellt haben.

Die in den Ausführungsbeispielen gezeigten Spannsegmente 1 sind gebildet aus einem Segmentkörper 23, an dessen erstes Ende ein Segmentkopf 21 und an dessen dem ersten Ende gegenüberliegendes zweites Ende ein Segmentfuß 22 angeordnet ist. Die Segmentköpfe 21 weisen auf ihrer radial außenliegenden Seite geneigt zur Längsachse verlaufende Schrägflächen 29 auf, die in, in einer Hohlschaftaufnahme ausgebildeten, geneigt verlaufenden Spannschräge zur Anlage gebracht werden können. Die Spannsegmente 1 werden in einer in Umfangsrichtung verlaufenden Ringnut in einer Arbeitsspindel gelagert und erstrecken sich im Wesentlichen in axialer Richtung parallel zur Längsachse einer entsprechenden Spannvorrichtung, wobei die Spannsegmente 1 in die Ringnut mit ihrem Segmentfuß 22 eingreifen, und wobei am entgegengesetzten freien Ende der Segmentkopf 21 vorgesehen ist, an dem die Schrägfläche 29 ausgebildet ist.

Eine entsprechende Spannvorrichtung ist in der DE 100 59 209 A1 näher beschrieben, wobei an dieser Stelle insbesondere auf deren Spalte 3, Zeilen 17 bis 25 verwiesen sei. Zur Verstellung der Spannsegmente 1 und damit zur Betätigung der - nicht näher dargestellten - Spannvorrichtung ist in der Arbeitsspindel ein axial verschieblicher Spannkopf geführt, der zur Ausbildung eines Keilgetriebes mit dem Segmentkopf 21 eine mit dessen Anlageflächen 31 zusammenwirkende Kegelfläche sowie zum Lösen der Spannung eine mit dem Segmentfuß 22 zusammenwirkende Stellfläche aufweist. Darüber hinaus besitzt der Spannkopf einen Ringbund mit einem axial konstanten Durchmesser, der mit einem am Segmentfuß 22 ausgebildeten Wulst 24 zusammenwirkt.

Bei der Segmentspannzange weist jedes der Spannsegmente 1 eine Aufnahme 2 auf, in der ein die Spannsegmente 1 miteinander verbindender Kopplungsring 3 aufgenommen ist. Aus den Figuren ergibt sich, dass die Aufnahmen 2 dabei im Segmentfuß 22 der Spannsegmente 1 ausgebildet sind. Wie weiterhin ersichtlich wird, sind die Aufnahmen 2 stirnseitig in den Spannsegmenten 1 auf ihrer der Werkzeugaufnahme abgewandten Seite ausgebildet. Mit anderen Worten bilden die umfangsseitig angeordneten Spannsegmente 1 und ihre Aufnahmen 2 dabei eine gebrochen ausführte Aufnahmeringnut 32. Den Aufnahmen 2 sind Sicherungsmittel 30 zugeordnet, die eine Verbindung des Kopplungsrings 3 mit den Spannsegmenten 1 bewirken. Die Sicherungsmittel 30 sind dabei sowohl zur Begrenzung der axialen Bewegbarkeit als auch zur umfangsseitigen Lagefestlegung der Spannsegmente 1 relativ zum Kopplungsring 3 vorgesehen. Vorzugsweise sind die Spannsegmente 1 zusätzlich formschlüssig am Kopplungsring 3 gelagert.

In allen Ausführungsformen der erfindungsgemäßen Segmentspannzange ist der Kopplungsring 3 aus in den Aufnahmen 2 aufgenommenen Sicherungsabschnitten 4 und aus die Sicherungsabschnitte 4 miteinander verbindenden Stegabschnitten 5 gebildet.

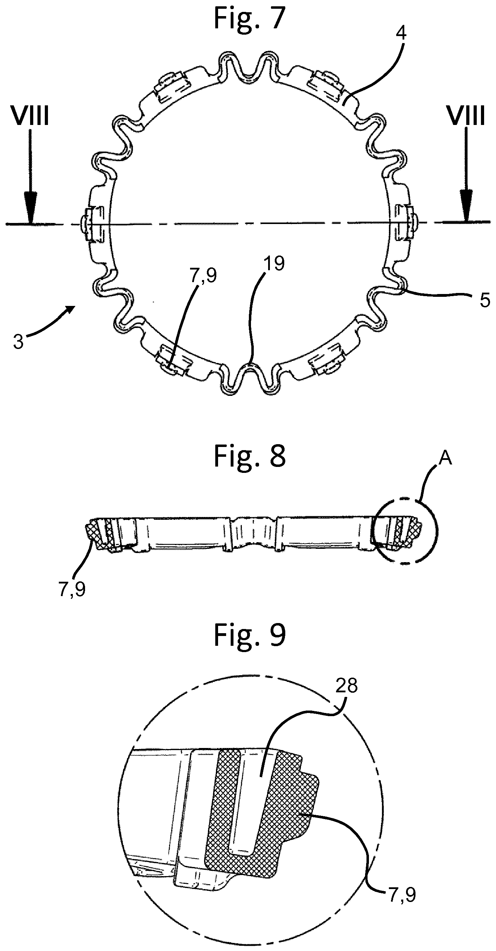

Bei der Segmentspannzange nach Fig. 1 ist die als Rastaufnahme 8 gebildete Ausnehmung 6 radial, vorliegend radial außenliegend orientiert. An dem Kopplungsring 3 ist an dessen Sicherungsabschnitten 4 ein als Rastglied 9 gebildetes Sicherungselement 7 gelagert, wobei dieses ebenfalls radial ausgerichtet ist und in die Rastaufnahme 8 der jeweiligen Spannsegmente 1, vorzugsweise flexibel eingreift. Eine Flexibilität entsteht dadurch, dass die Rastglieder 9 radial elastisch verformbar bzw. radial federnd gebildet sind. Sie können dadurch in die Rastaufnahmen 8 der Aufnahmen 2 einrasten. Die Federwirkung wird bei den Rastgliedern 9 durch einen Freischnitt 28 bzw. durch entsprechende Kavitäten erreicht, in die das jeweilige Rastglied 9 radial zurückweichen kann (vgl. Detailansicht Fig. 9).

Wie sich insbesondere aus den isolierten Darstellungen des zugehörigen Kopplungsringes 3 dieser Ausführungsform ergibt, sind die Sicherungsabschnitte 4 durch Stegabschnitte 5 miteinander verbunden zu einem in Umfangsrichtung geschlossenen Ring. Die Stegabschnitte 5 umfassen dabei ein federndes Element 19, welches in der gezeigten Ausführungsform wellenförmig gebildet ist. Diese Wellenform hält die Spannsegmente 1 gegenseitig des Weiteren unter einer Vorspannung, so dass die Segmentspannzange durch ihren Kopplungsring 3 stets in die Richtung einer geöffneten Position gedrückt wird.

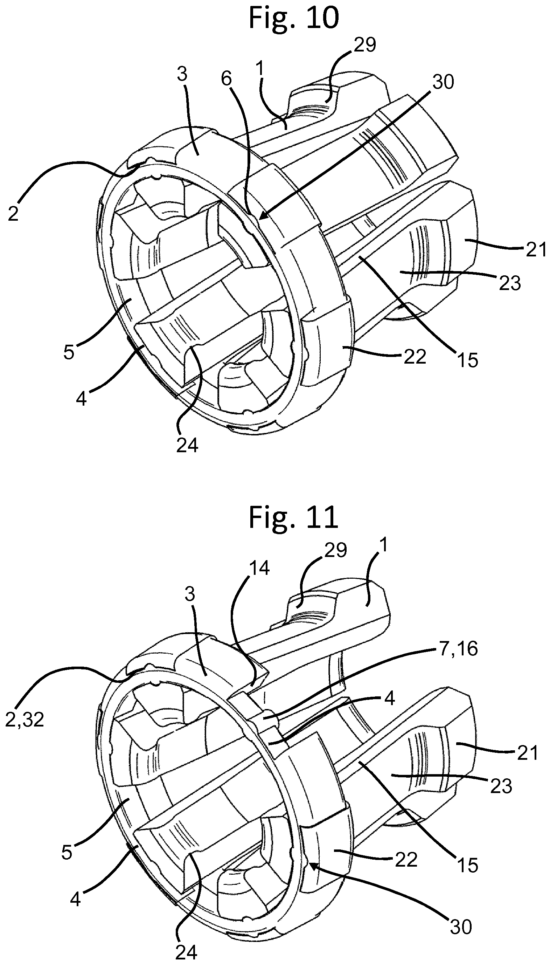

Bei der Segmentspannzange nach Fig. 10 sind die Ausnehmungen 6 in axialer Richtung an den Aufnahmen 2 der Spannsegmente 1 ausgebildet. In diese Ausnehmungen 6 treten Sicherungselemente 7 des Kopplungsrings 3 ein. Die Ausnehmungen 6 sind zur vereinfachten Fertigung als Bohrungen gebildet. Mit anderen Worten ist die hier gezeigte Aufnahmeringnut 32 also ergänzt durch Axialbohrungen, die die Ausnehmungen 6 in den einzelnen Aufnahmen 2 bilden. Hierbei ist die axiale Ausdehnung der Ausnehmungen 6 größer als die axiale Ausdehnung der stirnseitigen Aufnahmeringnut 32 bzw. der stirnseitigen Aufnahmen 2 der Spannsegmente 1. In diesen Bohrungen ist das Sicherungselement 7 des Kopplungsrings 3 aufgenommen, welches als ein Zapfen 16 geformt und am Sicherungsabschnitts 4 des Kopplungsringes 3 gelagert ist. Die Verbindung der Spannsegmente 1 mit dem Kopplungsring 3 wird dabei bewirkt, wie folgt: Nach dem Auftragen eines Primers wird ein Klebstoff in die Bohrungen eingebracht. Anschließend wird der Kopplungsring 3 in den Aufnahmen 2 und seine Zapfen 16 in den Ausnehmungen 6 platziert. Durch den hierbei entstehenden - ggfs. einen Kraftschluss unterstützenden - Stoffschluss wird der Kopplungsring 3 einerseits in seiner axialen Bewegbarkeit bezüglich der Spannsegmente 1 begrenzt und die Spannsegmente 1 andererseits am Kopplungsring 3 umfangsseitig in ihrer Lage festgelegt.

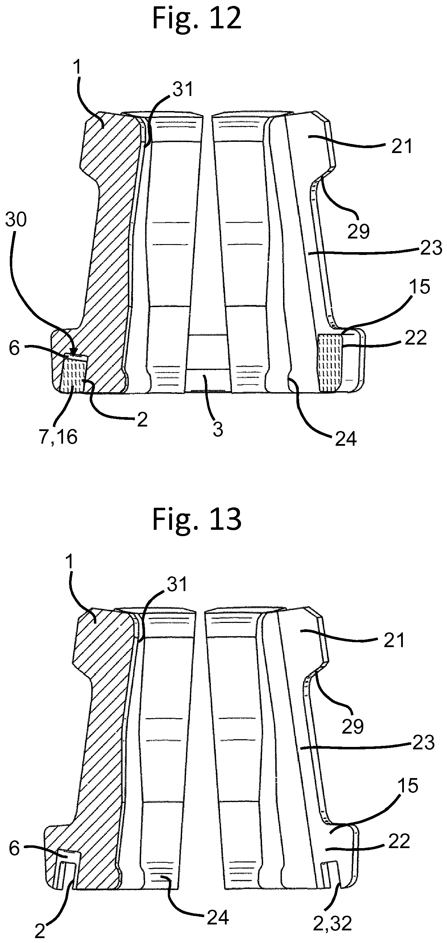

Bei dem Kopplungsring 3 dieser Ausführungsform ist die Fläche des Querschnitts des Sicherungsabschnitts 4 kleiner gebildet als die Fläche des Querschnitts des Stegabschnitts 5. Dadurch entsteht eine umfangsseitig glatte Oberfläche mit dem Spannsegmenten 1. Aus den Fig. 10 bis 12 ergibt sich ferner, dass der Kopplungsring 3 und die Aufnahmen 2 derart gestaltet sind, dass der Kopplungsring 3 nicht über die Stirnseite der Spannsegmente 1 hinausragt, sondern dass auch hier eine glatte Oberfläche entsteht.

Jeder der Stegabschnitte 5 weist zusätzlich an seinen beiden Enden eine Anlagewand 14 zur Anlage einer Wange 15 der Spannsegmente 1 auf, wodurch zusätzlich die umfangsseitige Lage der Spannsegmente 1 relativ zum Kopplungsring 3 festgelegt ist. Gemäß einer weiteren Ausführungsform sind die Anlagewände 14 je zwei benachbarter Stegabschnitte 5 derart ausgestaltet, dass die dazwischen liegenden Spannsegmente 1 formschlüssig am Kopplungsring 3 gelagert sind. Vorzugsweise wird weiterhin sogar eine Vorspannung auf die Spannsegmente 1 durch die benachbarten Anlagewände 14 ausgeübt.

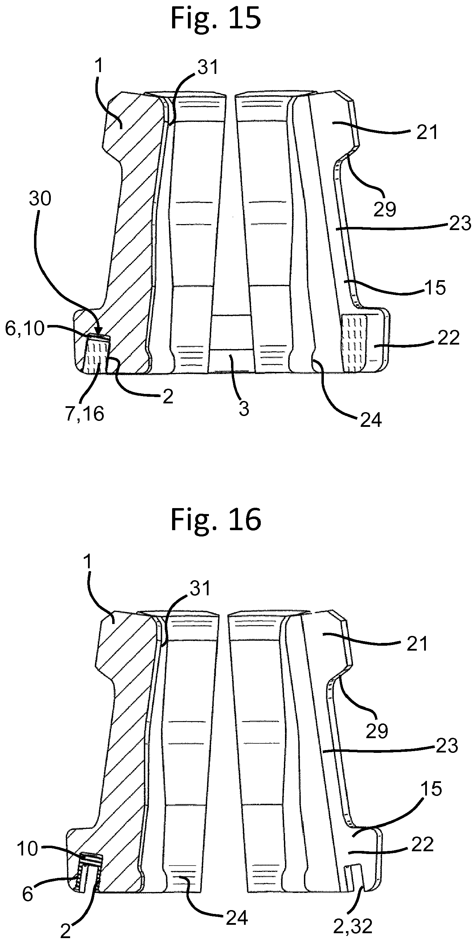

Der bei der Segmentspannzange nach Fig. 10 verwendete Kopplungsring 3 ist auch bei der Segmentspannzange nach Fig. 15 einsetzbar. Die Segmentspannzange nach Fig. 15 weist in den Aufnahmen 2 Ausnehmungen 6 auf, deren Durchmesser geringer gebildet ist, als der Durchmesser der Sicherungselemente 7 bzw. der Zapfen 16. Beim Einsetzen des Kopplungsringes 3 in die Aufnahmen 2, insbesondere beim Einbringen des Zapfens 16 in die Ausnehmungen 6, entsteht ein Kraftschluss. Auch hier kann zusätzlich ein Klebstoff Einsatz finden um neben einem Kraftschluss auch einen Stoffschluss zwischen den Ausnehmungen 6 und dem Zapfen 16 zu bilden. Zusätzlich kann die Oberfläche der Ausnehmung 6 aufgeraut sein, wodurch sich diese fest in dem, vorzugsweise kompressibel geformten Zapfen 16 verankern kann. Wie sich insbesondere aus Fig. 16 ergibt, kann alternativ auch ein Gewindeschnitt 10 in die Ausnehmung 2 eingebracht sein, so dass die Gewindegänge des Gewindeschnittes 10 den kompressiblen Zapfen 16 in der Ausnehmung 6 fixieren. Hinsichtlich der weiteren Ausgestaltung der Segmentspannzange nach Fig. 15 wird auf die Erläuterungen der Ausführungsform nach Fig. 10 verwiesen, da die Segmentspannzange nach Fig. 15 sehr viele mit dieser überstimmende Merkmale aufweist.

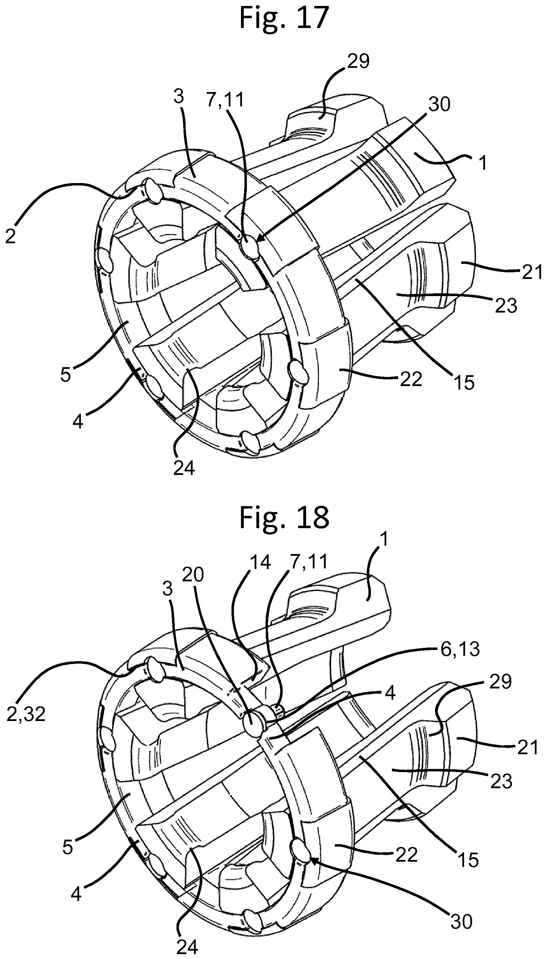

Bei der Segmentspannzange nach Fig. 17 sind die Sicherungselemente 7 den Aufnahmen 2 der Spannsegmente 1 zugeordnet. Die Sicherungselemente 7 sind als Sicherungsstifte 11 mit Stiftköpfen 20 gebildet. Diese Sicherungsstifte 11 sind in Taschen 12 der Aufnahmen 2 der Spannsegmente 1 eingepresst. Um die axiale Lage des Kopplungsrings 3 bezüglich der Spannsegmente 1 festzulegen bzw. um die axiale Bewegbarkeit des Kopplungsrings 3 bezüglich der Spannsegmente 1 zu begrenzen, treten diese Sicherungsstifte 11 durch die als Durchtritte 13 gestalteten Ausnehmungen 6 mit Spiel hindurch. Eine Komprimierung in axialer Richtung oder eine Expansion der Durchtritte 13 in radialer Richtung tritt dabei nicht auf, da die Sicherungsstifte 11 allenfalls eine Spielpassung mit den Durchtritten 13 des Kopplungsrings 3 ausbilden. Die Stegabschnitte 5 entsprechen den Stegabschnitten 5 gemäß den Ausführungsformen nach Fig. 10 und 15, weswegen an dieser Stelle auf die zu diesen gemachten Ausführungen verwiesen wird.

Der wesentliche Unterschied liegt jedoch darin, dass der Sicherungsabschnitt 4 die als Durchtritt 13 gebildete Ausnehmung 6 aufweist, die hier in der Art einer Ringöse geformt ist. Ferner weisen die Sicherungsabschnitte 4 im Bereich diese Ringöse eine Vertiefung 25 auf derart, dass der Stiftkopf 20 zumindest planflächig mit der Stirnseite der Spannsegmente 1 abschließt. Dieser Sicherungsstift 11 ist vorzugsweise als ein Niet oder eine Schraube oder ein Senkerbnagel gebildet und ist in die Taschen 12 der Spannsegmente 1 derart eingepresst, dass ein Überstand des Stiftkopfes 20 gegenüber dem Sicherungsabschnitt 4 des Kopplungsrings 3 vorliegt.

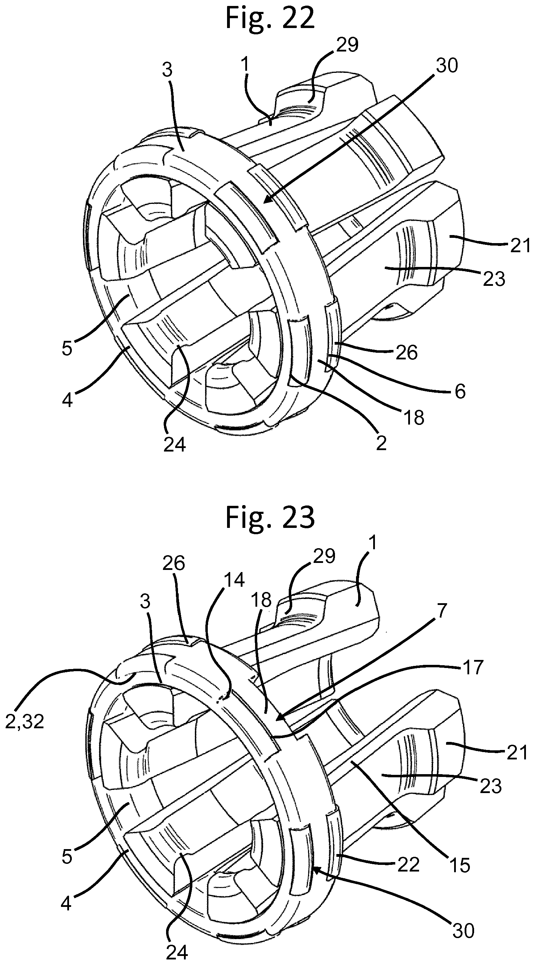

Die in Fig. 22 gezeigte Segmentspannzange besitzt einen Kopplungsring 3, dessen Sicherungsabschnitte 4 ein Sicherungselement 7 umfassen. Die Sicherungselemente 7 weisen eine Sicherungsausnehmung 17 und einen Sicherungssteg 18 auf. Die Spannsegmente 1 sind dabei so gestaltet, dass die stirnseitig ausgebildeten Aufnahmen 2 einen Abschnitt 33 aufweisen, der durch die Sicherungsausnehmung 17 des Kopplungsrings 3 hindurchragt.

Der Kopplungsring 3 besitzt ferner einen Sicherungssteg 18, der radial, vorzugsweise formschlüssig von einem Sicherungsarm 22 der Spannsegmente 1 beaufschlagt ist. Der Sicherungssteg 18 selbst ist dabei in einem Radialeinstich 27 gelagert, vorzugsweise derart, dass der Sicherungssteg 18 mit den Segmentfüßen 22 eine glatte Oberfläche ausbildet. Dieser Kopplungsring 3 verhindert auf diese Weise ein unerwünschtes Lösen der einzelnen Spannsegmente 1 vom Kopplungsring 3. Darüber hinaus ist die umfangsseitige Lage der Spannsegmente 1 am Kopplungsring 3 festgelegt.

Besondere Vorteile der erfindungsgemäßen Segmentspannzangen ergeben sich durch die kostengünstigere Herstellmöglichkeit und durch die einfache Fertigung der Kopplungsringe 3 durch ein generatives Fertigungsverfahren oder durch deren Herstellung mittels Spritzgießen.

Der Kopplungsring 3 hält über die Aufnahmen 2 sowie über die Sicherungsmittel 30 die einzelnen Spannsegmente 1 auf ihrer Position, so dass die Segmentspannzangen auch bei horizontal angeordneten Spindeln (Horizontalspindeln) Einsatz finden können. Darüber hinaus ist auf die Spannsegmente 1 der Segmentspannzangen eine Rückstellkraft ausgeübt derart, dass die Spannsegmente 1 in eine Offenstellung gedrückt werden, wobei die Stärke der Rückstellkraft durch den Kopplungsring 3 vorgebbar ist.

Der Vollständigkeit halber soll nachfolgend noch ein Verfahren zur Herstellung einer erfindungsgemäßen Segmentspannzange beschrieben werden. Das Verfahren zur Herstellung einer Segmentspannzange zeichnet sich aus durch die folgenden Schritte:
a) Ausbildung mindestens zweier Spannsegmente 1 aus Metall oder einer Metalllegierung mit jeweils einem Segmentkopf 21, einem Segmentfuß 22 und einem Segmentkörper 23,
b) Weiterbildung der Spannsegmente 1 durch Ausbildung einer Aufnahme 2, vorzugsweise an der Stirnseite des Segmentfußes 22 und Ausbildung einer Ausnehmung 6 in der Aufnahme 2,
   wobei dieser Arbeitsschritt b) vorzugsweise mit dem Arbeitsschritt a) in einem gemeinsamen Arbeitsschritt umgesetzt wird,
c) Fertigung eines Kopplungsrings 3 mit mindestens einer zur Anzahl der Spannsegmente 1 korrespondierenden Anzahl an Sicherungselementen 7 und Verbindung benachbarter Sicherungsabschnitte 4 des Kopplungsrings 3 mittels Stegabschnitten 5 unter Einsatzes entweder eines generativen Fertigungsverfahren oder eines Spritzgießens,
d) Einsetzen des Sicherungsabschnitts 4 des Kopplungsrings 3 in die Aufnahme 2 der Spannsegmente 1, sowie
e) Festlegung der Sicherungselemente 7 der Sicherungsabschnitte 4 in den Ausnehmungen 6 der Aufnahmen 2 derart, dass eine Begrenzung der axialen Bewegbarkeit des Kopplungsrings 3 bezüglich der Spannsegmente 1, sowie eine umfangsseitige Lagefestlegung der Spannsegmente 1 relativ zum Kopplungsring 3 gegeben ist.

### Bezugszeichenliste

- 1: Spannsegment
- 2: Aufnahme
- 3: Kopplungsring
- 4: Sicherungsabschnitte
- 5: Stegabschnitte
- 6: Ausnehmung
- 7: Sicherungselement
- 8: Rastaufnahme
- 9: Rastglied
- 10: Gewindering
- 11: Sicherungsstifte
- 12: Taschen
- 13: Durchtritt
- 14: Anlagewand
- 15: Wange
- 16: Zapfen
- 17: Sicherungsausnehmung
- 18: Sicherungssteg
- 19: federndes Element (Federelement)
- 20: Stiftkopf
- 21: Segmentkopf
- 22: Segmentfuß
- 23: Segmentkörper
- 24: Wulst
- 25: Vertiefung
- 26: Sicherungsarm
- 27: Radialeinstich
- 28: Freischnitt
- 29: Schrägflächen
- 30: Sicherungsmittel
- 31: Anlageflächen
- 32: Aufnahmeringnut
- 33: Abschnitt

## Patentansprüche

1. Segmentspannzange mit mindestens zwei Spannsegmenten (1), die aus einem Segmentkörper (23) gebildet sind, an dessen ersten Ende ein Segmentkopf (21) und an dessen dem ersten Ende gegenüberliegenden zweiten Ende ein Segmentfuß (22) angeordnet ist, wobei in jedem der Segmentfüße (22) eine Aufnahme (2) ausgebildet ist, in der ein die Spannsegmente(1) miteinander verbindender Kopplungsring (3) aufgenommen ist, zu dessen Verbindung mit den Spannsegmenten (1) Sicherungsmittel (30) sowohl zur Begrenzung der axialen Bewegbarkeit als auch zur umfangsseitigen Lagefestlegung der Spannsegmente (1) relativ zum Kopplungsring (3) vorgesehen sind, wobei die Aufnahmen (2) stirnseitig in den Spannsegmenten (1) ausgebildet und die Sicherungsmittel (30) den Aufnahmen (2) zugeordnet sind, wobei der Kopplungsring (3) aus in den Aufnahmen (2) aufgenommenen Sicherungsabschnitten (4) und aus die Sicherungsabschnitte (4) miteinander verbindenden Stegabschnitten (5) gebildet ist, und die Sicherungsmittel (30) gebildet sind aus einer Ausnehmung (6), die dem einen aus Aufnahme (2) und Kopplungsring (3) zugeordnet ist und aus einem Sicherungselement (7), das dem anderen aus Aufnahme (2) und Kopplungsring (3) zugeordnet ist, **dadurch gekennzeichnet, dass** die als Rastaufnahme (8) gebildete Ausnehmung (6) radial orientiert ist und in die Rastaufnahme (8) das ebenfalls in radialer Richtung angeordnete als Rastglied (9) gebildete Sicherungselement (7) eingreift, oder dass die Ausnehmungen (6) in axialer Richtung an den Aufnahmen (2) der Spannsegmente (1) ausgebildet und die Sicherungselemente (7) an den Sicherungsabschnitten (4) des Kopplungsrings (3) angeordnet sind.

2. Segmentspannzange nach Anspruch 1, **dadurch gekennzeichnet, dass** die Rastglieder (9) dem Kopplungsring (3) zugeordnet und radial elastisch verformbar an den Sicherungsabschnitten (4) gelagert sind.

3. Segmentspannzange nach Anspruch 1, **dadurch gekennzeichnet, dass** die Ausnehmungen (6) mit geringerem Durchmesser gebildet sind als diejenigen der Sicherungselemente (7).

4. Segmentspannzange nach Anspruch 1, **dadurch gekennzeichnet, dass** mindestens eine der Ausnehmungen (6) eine aufgeraute Oberfläche und/oder einen Gewindeschnitt (10) aufweisen, und dass die Sicherungselemente (7) des Kopplungsrings (3) in die Ausnehmungen (6) eingepresst sind.

5. Segmentspannzange nach Anspruch 1, **dadurch gekennzeichnet, dass** die Sicherungselemente (7) den Aufnahmen (2) der Spannsegmente (1) zugeordnet sind, dass die Sicherungselemente (7) als Sicherungsstifte(11) gebildet sind, die in den Aufnahmen (2) der Spannsegmente (1) ausgebildeten Taschen (12) eingepresst sind, und dass die als Durchtritte für die Sicherungsstifte (11) mit Spiel gestalteten Ausnehmungen (6) an den Sicherungsabschnitten (4) des Kopplungsrings (3) ausgebildet sind.

6. Segmentspannzange nach einem der Ansprüche 1 bis 5, **dadurch gekennzeichnet, dass** die Stegabschnitte (5) wellenförmig gestaltet sind.

7. Segmentspannzange nach einem der Ansprüche 1 bis 6, **dadurch gekennzeichnet, dass** die Stegabschnitte (5) mindestens eine Anlagewand (14) zur Anlage einer Wange (15) der Spannsegmente (1) aufweisen.

8. Segmentspannzange nach Anspruch 7, **dadurch gekennzeichnet, dass** die Spannsegmente (1) durch die Anlagewände (14) je zwei benachbarter Stegabschnitte (5) formschlüssig am Kopplungsring (3) gelagert sind.

9. Segmentspannzange nach einem der Ansprüche 1 bis 8, **dadurch gekennzeichnet, dass** die Sicherungsabschnitte (4) zusätzlich stoffschlüssig in den Aufnahmen (2) der Spannsegmente (1) gesichert sind.

10. Kopplungsring (3) für eine Segmentspannzange nach einem der Ansprüche 1 bis 9, wobei in alternierender Reihenfolge angeordnete Sicherungsabschnitte (4) und die Sicherungsabschnitte (4) miteinander verbindende Stegabschnitte (5) vorgesehen sind, und wobei den Sicherungsabschnitten (4) ein Sicherungselement (7) zugeordnet ist, **dadurch gekennzeichnet, dass** das Sicherungselement (7) sowohl zur Begrenzung der axialen Bewegbarkeit als auch zur ringumfangsseitigen Lagefestlegung von Spannsegmenten (1) am Kopplungsring (3) radial oder senkrecht zur Umfangsrichtung am Sicherungsabschnitt (4) angeordnet ist, und die Stegabschnitte (5) und/oder die Sicherungsabschnitte (4) aus einem Elastomer oder aus einem Kunststoff gebildet sind, und dass das Sicherungselement (7) aus einem federnden Rastglied (9) oder aus einem kompressiblen Zapfen (16) gebildet ist oder eine Sicherungsausnehmung (17) und einen Sicherungssteg (18) umfasst.

11. Kopplungsring (3) nach Anspruch 10, **dadurch gekennzeichnet, dass** der Stegabschnitt (5) ein federndes Element (19) umfasst.

12. Kopplungsring (3) nach Anspruch 11, **dadurch gekennzeichnet, dass** das federnde Element (19) wellenförmig gebildet ist.

13. Kopplungsring nach einem der Ansprüche 10 bis 12, **dadurch gekennzeichnet, dass** die Fläche des Querschnitts des Sicherungsabschnitts (4) kleiner als die Fläche des Querschnitts des Stegabschnitts (5) gebildet ist.

14. Kopplungsring nach einem der Ansprüche 10 bis 13, **dadurch gekennzeichnet, dass** der Sicherungsabschnitt (4) einen axialen Durchtritt (13) aufweist für die Durchführung eines Sicherungselementes (7) mit Spiel.

## Claims

1. Segment collet with at least two clamping segments (1) formed from a segment body (23), at the first end of which a segment head (21) is arranged and at the second end of which, opposite the first end, a segment foot (22) is arranged, wherein in each of the segment feet (22) a receptacle (2) is formed, in which a coupling ring (3) connecting the clamping segments (1) to one another is received, for connecting it to the clamping segments (1), securing means (30) are provided both for limiting the axial movability and for circumferentially fixing the position of the clamping segments (1) relative to the coupling ring (3), wherein the receptacles (2) are formed in the clamping segments (1) at the end faces and the securing means (30) are associated with the receptacles (2), wherein the coupling ring (3) is formed from securing sections (4) received in the receptacles (2) and from web sections (5) connecting the securing sections (4) to one another, and the securing means (30) are formed from a recess (6) associated with one of the receptacle (2) and coupling ring (3) and from a securing element (7) associated with the other of the receptacle (2) and coupling ring (3), **characterised in that** the recess (6) formed as a locking receiver (8) is radially oriented and the securing element (7), which is also arranged in the radial direction and is formed as a locking member (9), engages in the locking receiver (8), or **in that** the recesses (6) are formed in the axial direction on the receivers (2) of the clamping segments (1) and the securing elements (7) are arranged on the securing sections (4) of the coupling ring (3).

2. Segment collet according to claim 1, **characterised in that** the locking elements (9) are associated with the coupling ring (3) and are mounted on the securing sections (4) in a radially elastically deformable manner.

3. Segment collet according to claim 1, **characterised in that** the recesses (6) are formed with a smaller diameter than those of the securing elements (7).

4. Segment collet according to claim 1, **characterised in that** at least one of the recesses (6) has a roughened surface and/or a threaded cut (10), and that the securing elements (7) of the coupling ring (3) are pressed into the recesses (6).

5. Segment collet according to claim 1, **characterised in that** the securing elements (7) are associated with the receptacles (2) of the clamping segments (1), **in that** the securing elements (7) are formed as securing pins (11) which are pressed into pockets (12) formed in the receptacles (2) of the clamping segments (1), and **in that** the recesses (6), which are designed as passages for the securing pins (11) with bearing gap, are formed on the securing sections (4) of the coupling ring (3).

6. Segment collet according to one of claims 1 to 5, **characterised in that** the web sections (5) are designed in an undulating manner.

7. Segment collet according to one of the claims 1 to 6, **characterised in that** the web sections (5) have at least one contact wall (14) for contact with a cheek (15) of the clamping segments (1).

8. Segment collet according to claim 7, **characterised in that** the clamping segments (1) are supported on the coupling ring (3) in a form fitting manner by the contact walls (14) of two adjacent web sections (5).

9. Segment collet according to any one of claims 1 to 8, **characterized in that** the securing sections (4) are additionally secured in the receptacles (2) of the clamping segments (1) in a material-locking manner.

10. Coupling ring (3) for a segment collet chuck according to one of claims 1 to 9, wherein securing sections (4) arranged in alternating sequence and web sections (5) connecting the securing sections (4) to one another are provided, and wherein a securing element (7) is associated with the securing sections (4), **characterised in that** the securing element (7) is used both to limit the axial movability and to prevent the axial movement of the segment collet chuck is also arranged on the coupling ring (3) radially or perpendicularly to the circumferential direction on the securing section (4) for fixing the position of clamping segments (1) on the ring circumference, and that the web sections (5) and/or the securing sections (4) are formed from an elastomer or from a plastic, and the securing element (7) is formed from a resilient latching member (9) or from a compressible pin (16) or comprises a securing recess (17) and a securing web (18).

11. Coupling ring (3) according to claim 10, **characterised in that** the web portion (5) comprises a resilient element (19).

12. Coupling ring (3) according to claim 11, **characterized in that** the resilient element (19) is formed in a wave shape.

13. Coupling ring according to any one of claims 10 to 12, **characterized in that** the area of the cross-section of the securing portion (4) is formed smaller than the area of the cross-section of the web portion (5).

14. Coupling ring according to one of the claims 10 to 13, **characterised in that** the securing section (4) has an axial passage (13) for the passage of a securing element (7) with bearing gap.

## Revendications

1. Pince de serrage à segments, comprenant au moins deux seg-ments de serrage (1) qui sont constitués d'un corps de segment (23) sur la première extrémité duquel est disposée une tête de segment (21) et sur la deuxième extrémité duquel, située à l'opposé de la première extrémité, est disposé un pied de segment (22), chacun des pieds de segment (22) com-portant un logement (2) dans lequel est placée une bague de couplage (3) qui relie les segments de serrage (1) entre eux et dont la liaison avec les segments de serrage (1) est assurée par des moyens de verrouillage (30) destinés aussi bien à limiter la possibilité de déplacement axial qu'à défi-nir la position périphérique des segments de serrage (1) par rapport à la bague de couplage (3), les logements (2) étant réalisés côté face frontale dans les segments de serrage (1), et les moyens de verrouillage (30) étant associés aux logements (2), la bague de couplage (3) étant constituée de parties de verrouillage (4), disposées dans les logements (2), et de parties de paroi (5) reliant les parties de verrouillage (4) entre elles, et les moyens de verrouillage (30) étant constitués d'un évidement (6), qui est associé à un élément parmi le logement (2) et la bague de couplage (3), et d'un élément de verrouillage (7) qui est associé à l'autre élément parmi le logement (2) et la bague de couplage (3), **caractérisée en ce que** l'évidement (6), qui est réalisé sous forme de cavité d'encliquetage (8), est orienté radialement, et que l'élément de verrouillage (7), réalisé sous forme d'organe d'encliquetage (9) et disposé également dans le sens ra-dial, s'engage dans la cavité d'encliquetage (8), ou **en ce que** les évide-ments (6) sont réalisés dans la direction axiale sur les logements (2) des segments de serrage (1), et les éléments de verrouillage (7) sont disposés sur les parties de verrouillage (4) de la bague de couplage (3).

2. Pince de serrage à segments selon la revendication 1, caracté-risée en ce que les organes d'encliquetage (9) sont associés à la bague de couplage (3) et sont montés sur les parties de verrouillage (4) avec possi-bilité de déformation élastique radiale.

3. Pince de serrage à segments selon la revendication 1, caracté-risée en ce que les évidements (6) sont réalisés avec un diamètre plus faible que ceux des éléments de verrouillage (7).

4. Pince de serrage à segments selon la revendication 1, caracté-risée en ce qu'au moins un des évidements (6) présente une surface ru-gueuse et/ou un taraudage (10), et en ce que les éléments de verrouillage (7) de la bague de couplage (3) sont pressés dans les évidements (6).

5. Pince de serrage à segments selon la revendication 1, caracté-risée en ce que les éléments de verrouillage (7) sont associés aux loge-ments (2) des segments de serrage (1), en ce que les éléments de verrouil-lage (7) sont réalisés sous forme de broches de verrouillage (11) qui sont pressées dans des renfoncements (12) ménagés dans les logements (2) des segments de serrage (1), et en ce que les évidements (6), réalisés avec du jeu en tant que passages pour les broches de verrouillage (11) sont ména-gés sur les parties de verrouillage (4) de la bague de couplage (3).

6. Pince de serrage à segments selon l'une des revendications 1 à 5, **caractérisée en ce que** les parties de paroi (5) sont réalisées sous une forme ondulée.

7. Pince de serrage à segments selon l'une des revendications 1 à 6, **caractérisée en ce que** les parties de paroi (5) présentent au moins une paroi d'appui (14) destinée à l'appui d'une joue (15) des segments de ser-rage (1).

8. Pince de serrage à segments selon la revendication 7, caracté-risée en ce que les segments de serrage (5) sont supportés par complémen-tarité de formes sur la bague de couplage (3), par les parois d'appui (14) respectivement de deux parties de paroi (5) voisines.

9. Pince de serrage à segments selon l'une des revendications 1 à 8, **caractérisée en ce que** les parties de verrouillage (4) sont en plus fixées par adhérence dans les logements (2) des segments de serrage (1).

10. Bague de couplage (3) destinée à une pince de serrage à seg-ments selon l'une des revendications 1 à 9, sachant qu'il est prévu des parties de verrouillage (4) disposées en alternance et des parties de paroi (5) reliant les parties de verrouillage (4) entre elles, et sachant qu'un élé-ment de verrouillage (7) est associé aux parties de verrouillage (4), carac-térisée en ce que l'élément de verrouillage (7) est disposé sur la partie de verrouillage (4), dans le sens radial ou perpendiculairement à la direction périphérique, aussi bien pour limiter la possibilité de déplacement axial que pour définir la position périphérique des segments de serrage (1) sur la bague de couplage (3), et que les parties de paroi (5) et/ou les parties de verrouillage (4) sont réalisées à partir d'un élastomère ou d'une ma-tière plastique, et en ce que l'élément de verrouillage (7) est constitué d'un organe d'encliquetage (9) élastique ou d'un doigt (16) compressible, ou qu'il comporte un évidement de verrouillage (17) et une paroi de verrouillage (18).

11. Bague de couplage (3) selon la revendication 10, **caractérisée en ce que** la partie de paroi (5) comprend un élément élastique (19).

12. Bague de couplage (3) selon la revendication 11, **caractérisée en ce que** l'élément élastique (19) est réalisé sous une forme ondulée.

13. Bague de couplage selon l'une des revendications 10 à 12, ca-ractérisée en ce que la superficie de la section transversale de la partie de verrouillage (4) est inférieure à la superficie de la section transversale de la partie de paroi (5).

14. Bague de couplage selon l'une des revendications 10 à 13, ca-ractérisée en ce que la partie de verrouillage (4) présente une traversée axiale (13) destinée au passage d'un élément de verrouillage (7) avec du jeu.
